# EUROPEAN PATENT APPLICATION

(11) **EP 4 818 641 A1**
(43) Date of publication of application: **07.10.2026**
(21) Application number: 26169025.9
(22) Date of filing: 30.03.2026
(51) Int. Cl.: G01C 15/00, G01S 7/481, G01S 17/42, H02P 21/22

(54) **THREE-DIMENSIONAL SURVEYING APPARATUS AND THREE-DIMENSIONAL SURVEYING-APPARATUS DRIVING PROGRAM**

(30) Priority: 31.03.2025 JP 2025058288; 31.03.2025 JP 2025058289
(71) Applicant: Topcon Corporation, Tokyo 174-8580 (JP)
(72) Inventor: SHOJI, Naoki, Tokyo, 174-8580 (JP)
(74) Representative: Mewburn Ellis LLP

(57) **Abstract**

A three-dimensional surveying apparatus 4 includes a telescope unit 45 for collimating a measurement target 7 and emitting a distance-measuring light 455, driving motors 433, 443 for rotating the telescope unit 45 around a shaft center thereof, angle detectors 434, 444 for detecting a rotation angle of the telescope unit 45, and a control unit 46 for executing a collimation operation of the telescope unit 45 by executing PI control of the driving motors 433, 443 on the basis of the rotation angles detected by the angle detectors 434, 444. The control unit 46 changes an integral term of the PI control, during execution of the collimation operation, when a current angle of the rotation angle detected by the angle detectors 434, 444 exceeds a target angle related to the collimation operation.

## Description

### BACKGROUND OF THE INVENTION

### 1. Field of the Invention

This disclosure relates to a three-dimensional surveying apparatus for acquiring three-dimensional data of a measurement target and a three-dimensional surveying-apparatus driving program.

### 2. Description of the Related Art

Japanese Patent Application Publication No. 2021-43154 discloses a three-dimensional surveying apparatus including a collimation distance-measuring unit. The collimation distance-measuring unit described in Japanese Patent Application Publication No. 2021-43154 is a surveying apparatus, which is called a total station or the like, for example, and measures a three-dimensional coordinate (three-dimensional data) of a measurement point with high accuracy. A collimation distance-measuring unit emits distance-measuring light to a measurement target by means of collimation of a telescope unit, and measures a distance to the measurement target on the basis of a reflected distance-measuring light acquired by reflection of the distance-measuring light by the measurement target and internal reference light. In addition, the collimation distance-measuring unit detects an irradiation direction of the distance-measuring light, that is, a direction of collimation of a telescope unit. As a result, the collimation distance-measuring unit calculates a three-dimensional coordinate (three-dimensional data) of the measurement target on the basis of the measured distance and the detected angle.

The collimation distance-measuring unit may execute automatic collimation of the telescope unit. That is, a control unit of the collimation distance-measuring unit may execute control for automatic collimation of a measurement target by the telescope unit by executing control of a driving motor for rotating the telescope unit on the basis of a rotation angle of the telescope unit detected by an angle detector. Alternatively, the collimation distance-measuring unit may execute control for the telescope unit to collimate a measurement target which is present at an angle instructed by a user in accordance with a manipulation of the user to a manipulation input unit by executing control of the driving motor on the basis of a rotation angle of the telescope unit detected by an angle detector.

Here, with the purpose of preventing entry of dusts, dirt and water into an inside of an apparatus, a packing is installed in the vicinity of a rotating shaft of the telescope unit. In general, the packing installed in the vicinity of the rotating shaft of the telescope unit is formed of an elastic member such as rubber. Thus, due to occurrence of a stick-slip phenomenon or the like, for example, during execution of a collimation operation of the telescope unit, it may take relatively long time until the collimation operation is completed.

For example, in positioning control of a minute angle during execution of the collimation operation, a difference (that is, a deviation) between a current angle of a rotation angle of the telescope unit detected by the angle detector and a target angle related to the collimation operation is smaller than a difference at start of the collimation operation. Thus, when the control unit of the collimation distance-measuring unit executes the collimation operation of the telescope unit by executing PI control of the driving motor on the basis of a rotation angle of the telescope unit detected by the angle detector, a proportional term in proportion to a deviation of each control cycle is small all the time. On the other hand, an integral term as an integrated value of the deviation becomes larger as time elapses. Thus, an output value of the PI control (that is, an input value to the driving motor) becomes larger by an increase of the integral term with the elapse of time.

Here, in the PI control related to the collimation operation of a general telescope unit, a proportional gain and an integral gain are set to relatively small values. As a result, occurrence of vibration of the telescope unit in a large-angle turning operation of a global search is suppressed. However, in positioning control of a minute angle, a deviation is small, and an integral term becomes larger with the elapse of time. In addition, a load torque caused by a still frictional force generated by the packing installed for preventing entry of dusts, dirt and water into the inside of the apparatus changes with a shape change of the packing. Thus, when the load torque becomes smaller, a current angle of a rotation angle of the telescope unit may exceed a target angle related to the collimation operation. In this case, the control unit executes control of bringing the current angle closer to the target angle again. However, by executing as above, the current angle of a rotation angle of the telescope unit may exceed the target angle related to the collimation operation again. When such operation is repeated, vibration of the telescope unit may occur in the positioning control of a minute angle. As a result, it may take relatively long time until the collimation operation of the telescope unit is completed.

### SUMMARY OF THE INVENTION

This disclosure has been made in view of the above-described circumstances and has an object to provide a three-dimensional surveying apparatus and a three-dimensional surveying apparatus driving program which can reduce time taken until the collimation operation of the telescope unit is completed.

According to this disclosure, the above-described problem can be solved by a three-dimensional surveying apparatus for acquiring three-dimensional data of a measurement target, the apparatus including a telescope unit for collimating the measurement target and emitting distance-measuring light, a driving motor for rotating the telescope unit around a shaft center thereof, an angle detector for detecting a rotation angle of the telescope unit, and a control unit for executing a collimation operation of the telescope unit by executing PI control of the driving motor on the basis of the rotation angle detected by the angle detector, in which the control unit changes an integral term of the PI control when a current angle of the rotation angle detected by the angle detector exceeds a target angle related to the collimation operation during execution of the collimation operation.

According to this disclosure, a three-dimensional surveying apparatus and a three-dimensional surveying-apparatus driving program which can reduce time taken until the collimation operation of the telescope unit is completed can be provided.

### BRIEF DESCRIPTION OF THE DRAWINGS

FIG. 1 is a block diagram mainly illustrating a structure system of a three-dimensional surveying apparatus according to a First Embodiment;
FIG. 2 is a block diagram mainly illustrating a control system of the three-dimensional surveying apparatus according to the First Embodiment;
FIG. 3 is a flowchart for explaining an operation of the three-dimensional surveying apparatus according to the First Embodiment;
FIG. 4 is a graph for explaining a first specific example of an operation of the three-dimensional surveying apparatus according to the First Embodiment;
FIG. 5 is a graph for explaining a second specific example of an operation of the three-dimensional surveying apparatus according to the First Embodiment;
FIG. 6 is a graph for explaining a third specific example of an operation of the three-dimensional surveying apparatus according to the First Embodiment;
FIG. 7 is a flowchart for explaining an operation of a three-dimensional surveying apparatus according to a Second Embodiment;
FIG. 8 is a graph for explaining a specific example of an operation of the three-dimensional surveying apparatus according to the Second Embodiment; and
FIG. 9 is a graph acquired by enlarging a predetermined range of time in the graph illustrated in FIG. 8.

### DESCRIPTION OF THE PREFERRED EMBODIMENTS

In the following, a Preferred Embodiment of the present invention will be explained in detail with reference to the drawings.

It is to be noted that the Embodiment explained below is a preferred specific example of the present invention and thus, various limitations which are technically preferable are given, but the range of the present invention is not limited to these aspects unless there is such a description that the present invention is particularly limited in the following explanation. In addition, in each of the drawings, similar constituent elements are given the same signs, and detailed explanation will be omitted as appropriate.

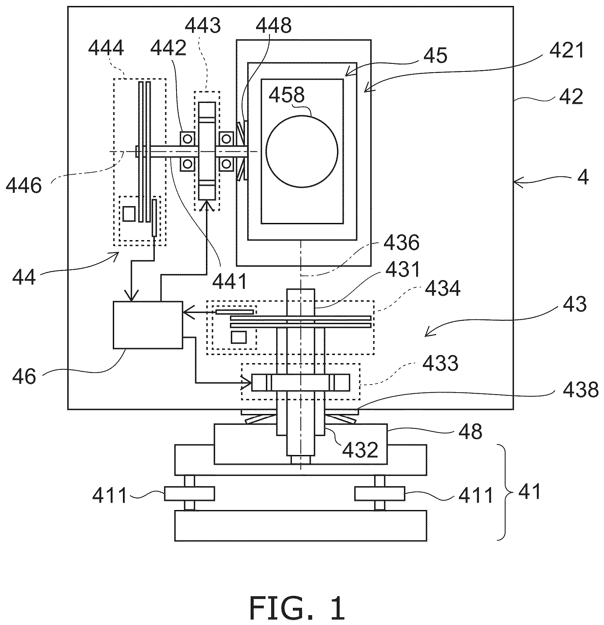

FIG. 1 is a block diagram mainly illustrating a structure system of a three-dimensional surveying apparatus according to a First Embodiment.

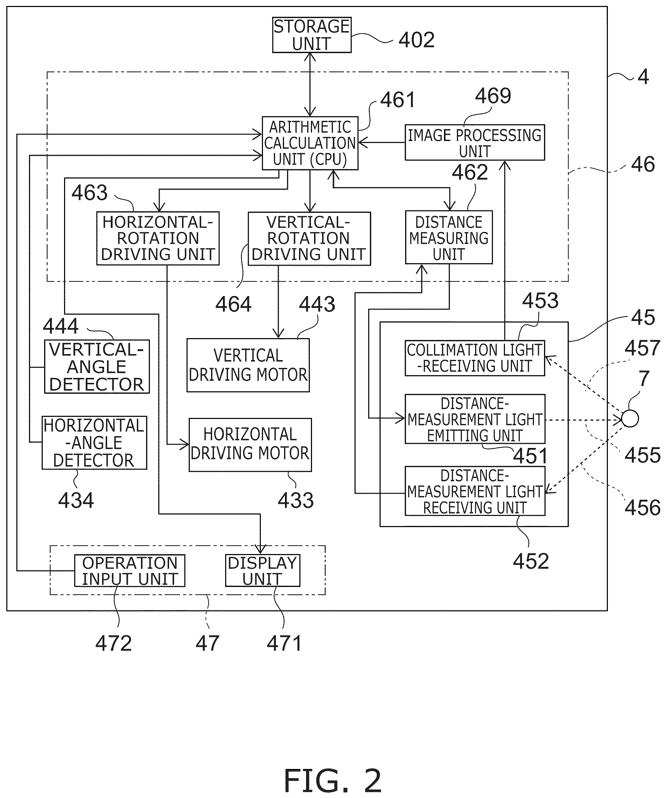

FIG. 2 is a block diagram mainly illustrating a control system of the three-dimensional surveying apparatus according to the First Embodiment.

A three-dimensional surveying apparatus 4 according to this Embodiment is a collimation distance-measuring unit called a total station or the like, for example, in which by means of collimation of a telescope unit 45, distance-measuring light 455 is emitted to a measurement target 7 (see FIG. 2), and a distance to the measurement target 7 is measured on the basis of reflected distance-measuring light 456 that the distance-measuring light 455 is reflected by the measurement target 7 and internal reference light (not shown), and an irradiation direction of the distance-measuring light 455, that is, a direction of collimation of the telescope unit 45 is detected. As a result, the three-dimensional surveying apparatus 4 performs distance measurement and angle measurement related to the measurement target 7 and acquires the three-dimensional coordinate (three-dimensional data) of the measurement target 7.

The three-dimensional surveying apparatus 4 includes a leveling unit 41, a bracket unit 42, a horizontal rotation unit 43, a vertical rotation unit 44, the telescope unit 45, a control unit 46, a manipulation display unit 47, and a base unit 48. The three-dimensional surveying apparatus 4 may have an automatic tracking function for automatically searching for the measurement target 7.

The control unit 46 has an arithmetic calculation unit 461, a distance measuring unit 462, a horizontal-rotation driving unit 463, a vertical-rotation driving unit 464, and an image processing unit 469. The arithmetic calculation unit 461 is a CPU (Central Processing Unit) or the like, for example, and, on the basis of a signal (instruction) transmitted from the manipulation input unit 472 of the manipulation display unit 47, executes start of a program, control processing of a signal, calculations, driving control of the display unit 471 of the manipulation display unit 47 or the like. That is, the arithmetic calculation unit 461 executes control of the entire three-dimensional surveying apparatus 4 and causes the display unit 471 to display surveying conditions, measurement results (distance-measurement results and angle-measurement results), results of image processing (image of collimation ranges) and the like.

The distance measuring unit 462, the horizontal-rotation driving unit 463, the vertical-rotation driving unit 464, and the image processing unit 469 are realized by execution of a program stored (stored) in a storage unit 402 by the arithmetic calculation unit 461. It is to be noted that the distance measuring unit 462, the horizontal-rotation driving unit 463, the vertical-rotation driving unit 464, and the image processing unit 469 may be realized by hardware or may be realized by combination of the hardware and software.

In the storage unit 402, a sequence program for measurement, an image processing program for image processing, calculation programs and the like, for example, are stored. As the storage unit 402, a semiconductor memory incorporated in the three-dimensional surveying apparatus 4 can be cited, for example. Alternatively, as the storage unit 402, various storage media such as CD (Compact Disc), DVD (Digital Versatile Disc), RAM (Random access memory), ROM (Read only memory), hard disk, a memory card and the like which can be connected to the three-dimensional surveying apparatus 4 can be cited.

The program executed by a computer including the control unit 46 is an example of the "three-dimensional surveying apparatus driving program" of the present invention. The "computer", here, is not limited to a personal computer but includes an arithmetic processing unit, a microcomputer and the like included in information processing equipment and collectively refers to equipment or an apparatus capable of realizing the function of the present invention by the program.

The leveling unit 41 is a part mounted on a tripod (not shown) and has three adjustment screws 411, for example. The leveling of the leveling unit 41 is performed at a survey position by adjustment of the adjustment screw 411 such that an inclination sensor (not shown) provided on the bracket unit 42 detects the horizontal. That is, the bracket unit 42 is maintained horizontally by the leveling performed by the adjustment screw 411 at the survey position.

The horizontal rotation unit 43 has a horizontal rotation shaft 431, a bearing 432, a horizontal driving motor 433, and a horizontal-angle detector (an encoder, for example) 434. The horizontal driving motor 433 of this Embodiment is an example of the "driving motor" of the present invention. The horizontal-angle detector 434 of this Embodiment is an example of the "angle detector" of the present invention. The horizontal rotation shaft 431 has a vertical shaft center 436 extending vertically and is rotatably supported by the base unit 48 via the bearing 432. The bracket unit 42 is supported by the horizontal rotation shaft 431 and is rotated integrally with the horizontal rotation shaft 431 in the horizontal direction around the vertical shaft center 436 as a center by the driving force transmitted from the horizontal driving motor 433.

The rotation angle (that is, the rotation angle of the bracket unit 42 and the telescope unit 45) of the horizontal rotation shaft 431 with respect to the base unit 48 is detected by the horizontal-angle detector 434. The detection result of the horizontal-angle detector 434 is input into the arithmetic calculation unit 461. The driving of the horizontal driving motor 433 is controlled by the horizontal-rotation driving unit 463 on the basis of the detection result of the horizontal-angle detector 434.

The vertical rotation unit 44 has a vertical rotation shaft 441, a bearing 442, a vertical driving motor 443, and a vertical-angle detector (an encoder, for example) 444. The vertical driving motor 443 of this Embodiment is an example of the "driving motor" of the present invention. The vertical-angle detector 444 of this Embodiment is an example of the "angle detector" of the present invention. The vertical rotation shaft 441 has a horizontal shaft center 446 extending horizontally and is rotatably supported by the bracket unit 42 via the bearing 442. One end part of the vertical rotation shaft 441 protrudes to a gap part 421 of the bracket unit 42. The telescope unit 45 is supported by the one end part of the vertical rotation shaft 441 protruding to the gap part 421 of the bracket unit 42 and rotates integrally with the vertical rotation shaft 441 in the vertical direction around the horizontal shaft center 446 as a center by driving force transmitted from the vertical driving motor 443.

The vertical-angle detector 444 is provided on the other end part of the vertical rotation shaft 441. The rotation angle (that is, the rotation angle of the telescope unit 45) of the vertical rotation shaft 441 with respect to the bracket unit 42 is detected by the vertical-angle detector 444. A detection result of the vertical-angle detector 444 is input into the arithmetic calculation unit 461. The driving of the vertical driving motor 443 is controlled by the vertical-rotation driving unit 464 on the basis of a detection result of the vertical-angle detector 444.

The telescope unit 45 is, as described above, supported by the vertical rotation shaft 441 and is rotated in the vertical direction around the horizontal shaft center 446 by the driving force transmitted from the vertical driving motor 443. The telescope unit 45 has a collimation telescope 458, is collimated by the measurement target 7, and emits the distance-measuring light 455. The distance-measuring light 455 is emitted onto the distance-measurement optical axis of the telescope unit 45. The distance-measurement optical axis of the telescope unit 45 crosses the vertical shaft center 436 and crosses the horizontal shaft center 446 at a right angle. The crossing point between the distance-measurement optical axis of the telescope unit 45 and the vertical shaft center 436 may be set to a machine reference point of the three-dimensional surveying apparatus 4. In the explanation of this Embodiment, such a case that the machine reference point of the three-dimensional surveying apparatus 4 is a crossing point of the distance-measurement optical axis of the telescope unit 45 and the vertical shaft center 436 is cited as an example.

The telescope unit 45 has a distance-measuring light emitting unit 451, a distance-measuring light receiving unit 452, and a collimation light-receiving unit 453.

The distance-measuring light emitting unit 451 is driven / controlled by the distance measuring unit 462. The distance-measuring light emitting unit 451 is provided inside the telescope unit 45 and emits the distance-measuring light 455 such as a laser light, for example, to a direction crossing the horizontal shaft center 446 at a right angle. The distance-measuring light 455 emitted from the distance-measuring light emitting unit 451 is emitted to the measurement target 7. The reflected distance-measuring light 456 reflected by the measurement target 7 is received by the distance-measuring light receiving unit 452 provided inside the telescope unit 45. The distance-measuring light receiving unit 452 converts brightness/darkness (light receiving result) by the received reflected distance-measuring light 456 to an electronic signal (light receiving signal) and transmits a light receiving signal to the distance measuring unit 462. In addition, the distance-measuring light receiving unit 452 receives the internal reference light (not shown) led from a reference-light optical unit (not shown), converts it to an electric signal, and transmits it to the distance measuring unit 462.

The distance measuring unit 462 calculates a distance to the measurement target 7 on the basis of the light receiving signal transmitted from the distance-measuring light receiving unit 452. That is, the reflected distance-measuring light 456 and the internal reference light are converted to each of a reflected distance-measuring light electric signal and an internal reference-light electric signal and sent to the distance measuring unit 462. The distance to the measurement target 7 is measured on the basis of a difference of a time interval between the reflected distance-measuring light electric signal and the internal reference-light electric signal. A calculation result of the distance measuring unit 462 is input into the arithmetic calculation unit (CPU) 461.

The arithmetic calculation unit 461 calculates a coordinate of the measurement target 7 on the basis of a distance to the measured measurement target 7, a vertical angle detected by the vertical-angle detector 444, and a horizontal angle detected by the horizontal-angle detector 434. That is, the arithmetic calculation unit 461 acquires a three-dimensional coordinate (three-dimensional data) of a measurement point related to the measurement target 7 by measuring a distance to the measurement target 7 and by detecting an irradiation direction of the distance-measuring light 455. Alternatively, the arithmetic calculation unit 461 may calculate a coordinate of a machine reference point of the three-dimensional surveying apparatus 4 with a predetermined position (a survey start position, for example) as a reference on the basis of the distance to the measured measurement target 7, the vertical angle detected by the vertical-angle detector 444, and the horizontal angle detected by the horizontal-angle detector 434.

The collimation light-receiving unit 453 is an image sensor such as a CCD (Charge Coupled Device), a CMOS (Complementary Metal Oxide Semiconductor) and the like, for example, and receives a reflected collimation light 457 in a wavelength region different from the wavelength region of the reflected distance-measuring light 456. The reflected collimation light 457 is light having a wavelength region different from the wavelength region of the reflected distance-measuring light 456 and is light having been reflected by the measurement target 7. That is, the collimation light-receiving unit 453 receives the reflected collimation light 457 reflected by the measurement target 7 and receives an image of the measurement target 7. As the reflected collimation light 457, natural light, infrared light or the like can be cited, for example. However, the reflected collimation light 457 is not limited only to that. The reflected collimation light 457 is received in the collimation light-receiving unit 453 provided inside the telescope unit 45. The collimation light-receiving unit 453 converts brightness/darkness (light receiving result) by the reflected collimation light 457 to an electronic signal (image signal) and transmits the image signal to the image processing unit 469.

The image processing unit 469 executes image processing of the image signal transmitted from the collimation light-receiving unit 453 and transmits it as an image data signal to the arithmetic calculation unit 461. The arithmetic calculation unit 461 executes calculation on the basis of the image data signal transmitted from the image processing unit 469 and executes control of causing the image of the collimation range by the telescope unit 45 to be displayed on the display unit 471 of the manipulation display unit 47.

As illustrated in FIG. 1, a first packing 438 is provided in the vicinity of a part where the bracket unit 42 is supported by the horizontal rotation shaft 431. In addition, a second packing 448 is provided in the vicinity of a part where the telescope unit 45 is supported by the vertical rotation shaft 441. The first packing 438 and the second packing 448 are formed of an elastic member such as rubber. The first packing 438 blocks a gap between the bracket unit 42 and the bearing 432 and suppresses entry of dusts and water into an inside of the three-dimensional surveying apparatus 4. In addition, the second packing 448 blocks a gap between the telescope unit 45 and the vertical rotation shaft 441 and suppresses entry of dusts and water into the inside of the three-dimensional surveying apparatus 4.

Hereinafter, details of an operation of the three-dimensional surveying apparatus 4 according to this Embodiment and the three-dimensional surveying apparatus driving program executed by a computer of the three-dimensional surveying apparatus 4 according to this Embodiment will be explained with reference to the drawings.

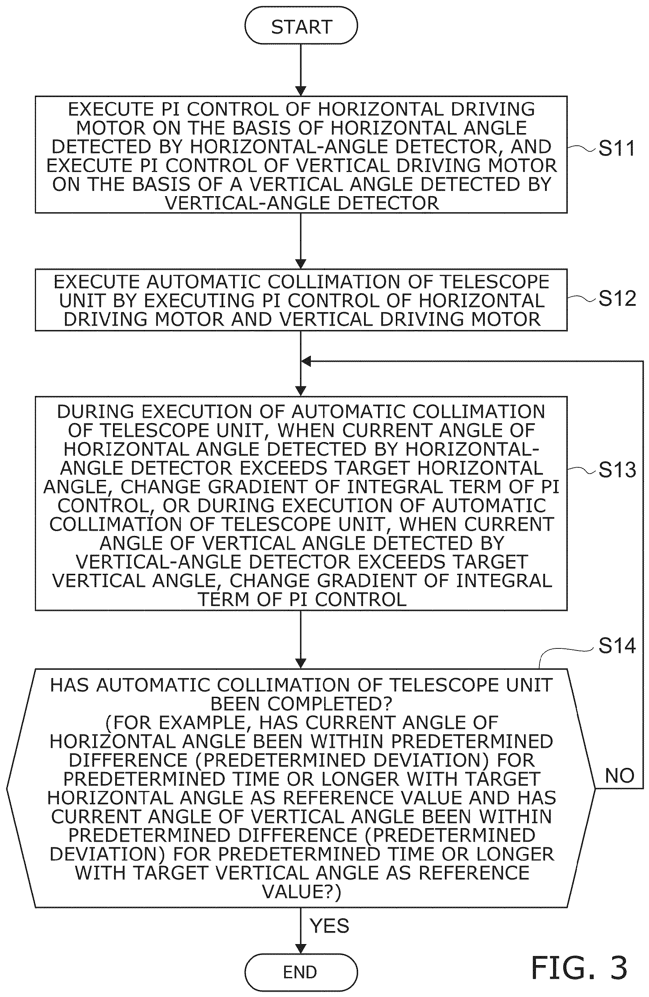

FIG. 3 is a flowchart for explaining an operation of the three-dimensional surveying apparatus according to the First Embodiment.
It is to be noted that FIG. 3 corresponds to a flowchart for explaining the three-dimensional surveying apparatus driving program executed by a computer of the three-dimensional surveying apparatus 4 according to the First Embodiment.

The control unit 46 of this Embodiment executes the PI control of the horizontal driving motor 433 and the vertical driving motor 443, when the telescope unit 45 performs an operation of the "automatic collimation of the telescope unit" that the telescope unit 45 automatically collimates the measurement target 7. In addition, the control unit 46 of this Embodiment executes the PI control of the horizontal driving motor 433 and the vertical driving motor 443, when an operation that the telescope unit 45 collimates the measurement target 7 which is present at an angle instructed by the user in accordance with the manipulation by the user to the manipulation input unit 472. The three-dimensional surveying apparatus 4 and the three-dimensional surveying apparatus driving program according to this Embodiment can be applied to any of the above-described collimation operations. That is, any of the above-described collimation operations is included in the "collimation operation" of the present invention. In the explanation below, for convenience of the explanation, a case in which the control unit 46 performs an operation of "automatic collimation of the telescope unit" will be cited as an example. In addition, in the explanation below, for convenience of the explanation, the "operation of automatic collimation" shall be referred to simply as the "automatic collimation" in some cases.

As illustrated in FIG. 3, at Step S11, the control unit 46 executes the PI control of the horizontal driving motor 433 on the basis of a horizontal angle detected by the horizontal-angle detector 434. In addition, at Step S11, the control unit 46 executes the PI control of the vertical driving motor 443 on the basis of a vertical angle detected by the vertical-angle detector 444.

As described above, the control unit 46 executes the automatic collimation of the telescope unit 45 by executing the PI control of the horizontal driving motor 433 and the vertical driving motor 443 (Step S12).

Subsequently, at Step S13, during the execution of the automatic collimation of the telescope unit 45, when a current angle of the horizontal angle detected by the horizontal-angle detector 434 exceeds a target horizontal angle related to automatic collimation of the telescope unit 45, the control unit 46 changes a gradient of an integral term of the PI control. In this application specification, the "gradient of an integral term" is assumed to refer to a change amount of an integral term per unit time or a change amount per unit time of a value calculated by an integral term of the PI control.

In addition, at Step S13, in the execution of the automatic collimation of the telescope unit 45, the control unit 46 changes a gradient of an integral term of the PI control, when the current angle of the vertical angle detected by the vertical-angle detector 444 exceeds the target vertical angle related to the automatic collimation of the telescope unit 45.

Subsequently, at Step S14, the control unit 46 determines whether or not the automatic collimation of the telescope unit 45 has been completed. For example, in a case where the current angle of the horizontal angle is within a predetermined difference (that is, a predetermined deviation) with the target horizontal angle as a reference value for predetermined time or longer and the current angle of the vertical angle is within a predetermined difference (that is, a predetermined deviation) with the target vertical angle as the reference value for predetermined time or longer, the control unit 46 determines that the automatic collimation of the telescope unit has been completed.

Specifically, for example, in a case where the current angle of the horizontal angle is within a range of "target horizontal angle ± 3 seconds" for 200 milliseconds (msec) or longer and the current angle of the vertical angle is within a range of "target vertical angle ± 3 seconds" for 200 milliseconds (msec) or longer, the control unit 46 determines that the automatic collimation of the telescope unit 45 has been completed. However, the predetermined difference (that is, the predetermined deviation) is not limited to "± 3 seconds". Moreover, the predetermined time is not limited to 200 milliseconds.

When the control unit 46 determines that the automatic collimation of the telescope unit 45 has been completed (Step S14: YES), it ends the control of the automatic collimation of the telescope unit 45. On the other hand, when the control unit 46 determines that the automatic collimation of the telescope unit 45 has not been completed (Step S14: NO), it executes the processing described above in relation to Step S13.

That is, the control unit 46 changes the gradient of the integral term of the PI control each time the current angle of the horizontal angle exceeds the target horizontal angle. In addition, the control unit 46 changes the gradient of the integral term of the PI control each time the current angle of the vertical angle exceeds the target vertical angle. In this case, the control unit 46 executes control of reducing the gradient of the integral term of the PI control. That is, the control unit 46 reduces in steps the gradient of the integral term of the PI control each time the current angle of the rotation angle of the telescope unit 45 exceeds the target angle related to the automatic collimation of the telescope unit 45.

According to the three-dimensional surveying apparatus 4 and the three-dimensional surveying apparatus driving program according to this Embodiment, the control unit 46 can set the integral gain of the PI control related to the automatic collimation of the telescope unit 45 to a larger value as compared to the integral gain of the PI control set for suppressing occurrence of vibration of the telescope unit in a large angle turning operation of the global search. Thus, even in a range in which a difference between the current angle of the rotation angle of the telescope unit 45 and the target angle related to the automatic collimation of the telescope unit 45 (that is, the deviation) is small (that is, a range of positioning control of a minute angle), the integral term of the PI control becomes large in a relatively short time.

That is, in a range in which the deviation between the current angle of the rotation angle of the telescope unit 45 and the target angle related to the automatic collimation of the telescope unit 45 is small, each torque of the horizontal driving motor 433 and the vertical driving motor 443 becomes larger within a relatively short time. As a result, the control unit 46 can bring the current angle of the rotation angle of the telescope unit 45 closer to the target angle related to the automatic collimation of the telescope unit 45 within a relatively short time.

At this time, when the current angle of the rotation angle of the telescope unit 45 exceeds the target angle related to the automatic collimation of the telescope unit 45, the control unit 46 changes (specifically, reduces) the gradient of the integral term of the PI control. As a result, each of the torques of the horizontal driving motor 433 and the vertical driving motor 443 is changed (specifically, reduced). Thus, even in a case where the current angle of the rotation angle of the telescope unit 45 exceeds the target angle related to the automatic collimation of the telescope unit 45, the control unit 46 can gently bring the current angle of the rotation angle of the telescope unit 45 closer to the target angle related to the automatic collimation of the telescope unit 45 in a relatively short time. As a result, the three-dimensional surveying apparatus 4 according to this Embodiment can reduce time taken until the automatic collimation of the telescope unit 45 is completed.

Subsequently, a specific example of the operation of the three-dimensional surveying apparatus 4 according to this Embodiment will be explained with reference to the drawings.

It is to be noted that, as described above in relation to FIG. 3, the control that the control unit 46 changes the gradient of the integral term of the PI control is similar to the case where the current angle of the horizontal angle detected by the horizontal-angle detector 434 exceeds the target horizontal angle related to the automatic collimation of the telescope unit 45 and the case in which the current angle of the vertical angle detected by the vertical-angle detector 444 exceeds the target vertical angle related to the automatic collimation of the telescope unit 45. Thus, in the explanation below, the case in which the current angle of the vertical angle detected by the vertical-angle detector 444 exceeds the target vertical angle related to the automatic collimation of the telescope unit 45 will be explained as an example. In addition, for convenience of the explanation, the vertical angle detected by the vertical-angle detector 444 will be referred to simply as the "rotation angle" in some cases, and the target vertical angle will be referred to simply as the "target angle" in some cases.

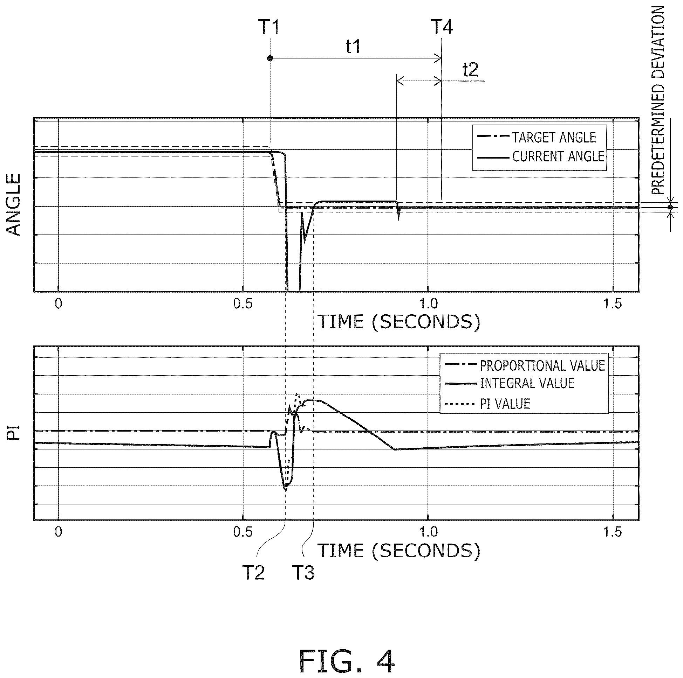

FIG. 4 is a graph for explaining a first specific example of an operation of the three-dimensional surveying apparatus according to the First Embodiment.
The graph on the upper stage illustrated in FIG. 4 is a graph exemplifying relations among elapsed time, a current angle of the vertical angle detected by the vertical-angle detector 444, and a target angle related to the automatic collimation of the telescope unit 45. The graph on the lower stage illustrated in FIG. 4 is a graph exemplifying relations among the elapsed time, a proportional term, an integral term, and an output value (that is, an input value to the vertical driving motor 443) of the PI control.

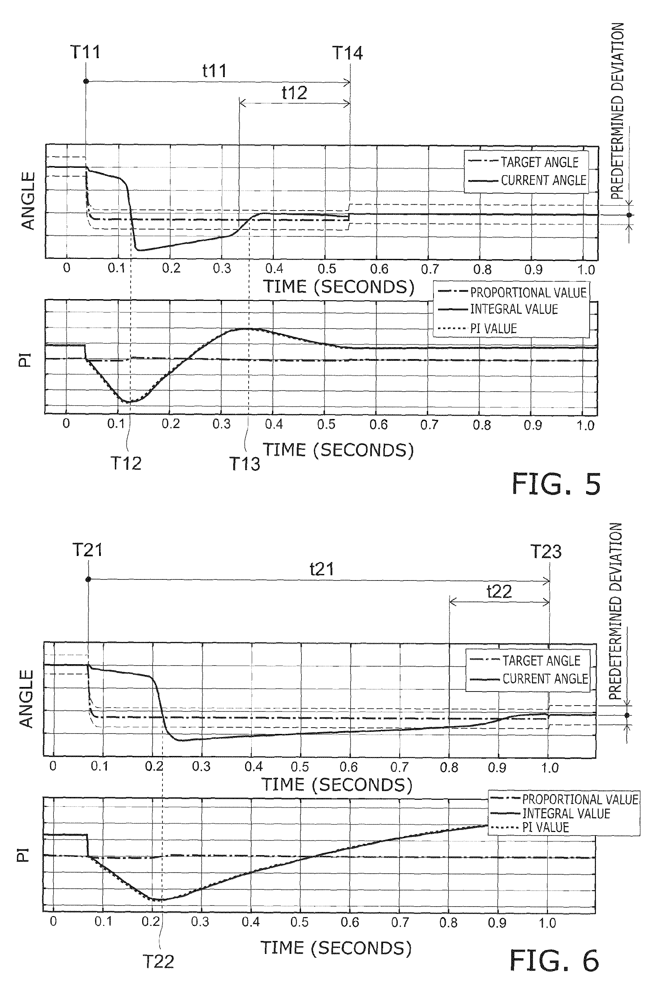

In the graph on the lower stage illustrated in FIG. 4, the "proportional value" expresses a value calculated by a proportional term of the PI control. The "integral value" expresses a value calculated by an integral term of the PI control. The "PI value" expresses an output value of the PI control (that is, an input value to the vertical driving motor 443). This similarly applies to the graph on the lower stage illustrated in FIG. 5 and FIG. 6, which will be described later.

In the graph exemplified in FIG. 4, the control unit 46 starts execution of the automatic collimation at Timing T1. Subsequently, at Timing T2, the current angle of the vertical angle detected by the vertical-angle detector 444 exceeds the target angle related to the automatic collimation. Thus, as in the graph on the lower stage illustrated in FIG. 4, the control unit 46 changes the gradient of the integral term of the PI control at Timing T2. Specifically, the control unit 46 reduces the gradient of the integral term of the PI control.

The control unit 46 of this Embodiment changes the gradient of the integral term of the PI control by changing a coefficient included in the integrated gain of the integral term of the PI control. The "coefficient" referred to here is expressed by a power expression as in the expression (1) below, for example. 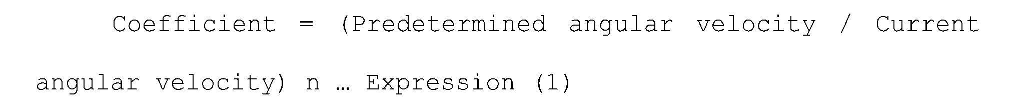 Coefficient = (Predetermined angular velocity / Current angular velocity) n Expression (1) 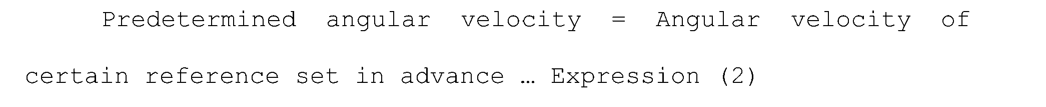 Predetermined angular velocity = Angular velocity of certain reference set in advance Expression (2) 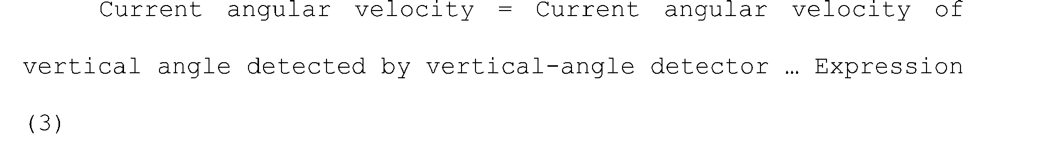 Current angular velocity = Current angular velocity of vertical angle detected by vertical-angle detector ... Expression (3)

The current angular velocity of the vertical angle detected by the vertical-angle detector 444 is a current angular velocity of a rotation angle of the vertical rotation shaft 441 (that is, a rotation angle of the telescope unit 45). The control unit 46 changes the gradient of the integral term of the PI control by changing the power exponent n expressed in the Expression (1). However, means for changing the gradient of the integral term of the PI control is not limited to the change of the power exponent n expressed in the Expression (1).

Subsequently, at Timing T3, the current angle of the vertical angle detected by the vertical-angle detector 444 exceeds the target angle related to the automatic collimation again. Thus, as in the graph on the lower stage expressed in FIG. 4, the control unit 46 changes the gradient of the integral term of the PI control at Timing T3 again. Means for changing the gradient of the integral term of the PI control is as described above, for example.

Subsequently, at Timing T4 when the current angle of the vertical angle is within the predetermined deviation (± 3 seconds, for example) with the target angle as a reference value for predetermined time t2 (for 200 milliseconds, for example) or longer, the control unit 46 determines that the automatic collimation of the telescope unit 45 has been completed and ends the control of the automatic collimation of the telescope unit 45. In the graph exemplified in FIG. 4, time t1 taken from Timing T1 when the automatic collimation was started to Timing T4 when the automatic collimation was completed is approximately 0.5 seconds.

FIG. 5 is a graph for explaining a second specific example of an operation of the three-dimensional surveying apparatus according to the First Embodiment.
FIG. 6 is a graph for explaining a third specific example of an operation of the three-dimensional surveying apparatus according to the First Embodiment.

The graphs in each of the upper stages illustrated in FIG. 5 and FIG. 6 are, similarly to the graph on the upper stage illustrated in FIG. 4, graphs exemplifying the relations among the elapsed time, the current angle of the vertical angle detected by the vertical-angle detector 444, and the target angle related to the automatic collimation of the telescope unit 45. The graphs in each of the lower stages illustrated in FIG. 5 and FIG. 6 are, similarly to the graph on the lower stage illustrated in FIG. 4, graphs exemplifying the relations among the elapsed time, a proportional term, an integral term, and an output value of the PI control.

The graphs illustrated in FIG. 5 and FIG. 6 are graphs comparing the gradients of the integral terms of the PI control. That is, the gradient of the integral term of the PI control in the graph illustrated in FIG. 5 is larger than the gradient of the integral term of the PI control in the graph illustrated in FIG. 6.

In the graph exemplified in FIG. 5, the control unit 46 has started execution of the automatic collimation at Timing T11. Subsequently, at Timing T12, the current angle of the vertical angle detected by the vertical-angle detector 444 exceeds the target angle related to the automatic collimation. Thus, as in the graph on the lower stage illustrated in FIG. 5, the control unit 46 changes the gradient of the integral term of the PI control at Timing T12. Specifically, the control unit 46 reduces the gradient of the integral term of the PI control.

As described above in relation to FIG. 4, for example, the control unit 46 changes the gradient of the integral term of the PI control by changing the power exponent n expressed in the Expression (1). At this time, the exponent n set by the control unit 46 is larger than the exponent n set by the control unit 46 in the graph exemplified in FIG. 6. Thus, the coefficient included in the integral gain of the integral term expressed in the graph on the lower stage illustrated in FIG. 5 is larger than the coefficient included in the integral gain of the integral term expressed in the graph on the lower stage illustrated in FIG. 6. As a result, the gradient of the integral term expressed in the graph on the lower stage illustrated in FIG. 5 is larger than the gradient of the integral term expressed in the graph on the lower stage illustrated in FIG. 6.

Subsequently, at Timing T13, the current angle of the vertical angle detected by the vertical-angle detector 444 exceeds the target angle related to the automatic collimation again. Thus, as in the graph on the lower stage illustrated in FIG. 5, the control unit 46 changes the gradient of the integral term of the PI control at Timing T13 again. Means for changing the gradient of the integral term of the PI control is as described above, for example.

Subsequently, at Timing T14 when the current angle of the vertical angle is within the predetermined deviation (± 3 seconds, for example) with the target angle as a reference value for predetermined time t12 (200 milli seconds, for example) or longer, the control unit 46 determines that the automatic collimation of the telescope unit 45 has been completed and ends the control of the automatic collimation of the telescope unit 45. In the graph exemplified in FIG. 5, time t11 taken from Timing T11 when the automatic collimation was started until Timing T14 when the automatic collimation is completed is approximately 0.5 seconds.

On the other hand, in the graph exemplified in FIG. 6, the control unit 46 has started execution of the automatic collimation at Timing T21. Subsequently, at Timing T22, the current angle of the vertical angle detected by the vertical-angle detector 444 exceeds the target angle related to the automatic collimation. Thus, as in the graph on the lower stage illustrated in FIG. 6, the control unit 46 changes the gradient of the integral term of the PI control at Timing T22. Specifically, the control unit 46 reduces the gradient of the integral term of the PI control.

As described above in relation to FIG. 4, for example, the control unit 46 changes the gradient of the integral term of the PI control by changing the power exponent n expressed in the Expression (1). The exponent n set by the control unit 46 at this time is smaller than the exponent n set by the control unit 46 in the graph exemplified in FIG. 5. Thus, the coefficient included in the integral gain of the integral term illustrated in the graph on the lower stage illustrated in FIG. 6 is smaller than the coefficient included in the integral gain of the integral term illustrated in the graph on the lower stage illustrated in FIG. 5. As a result, the gradient of the integral term expressed in the graph on the lower stage illustrated in FIG. 6 is smaller than the gradient of the integral term expressed in the graph on the lower stage illustrated in FIG. 5. When the graphs on each of the lower stages illustrated in FIG. 5 and FIG. 6 are compared, it is known that the gradient of the integral term illustrated in the graph on the lower stage illustrated in FIG. 6 is gentler than the gradient of the integral term illustrated in the graph on the lower stage illustrated in FIG. 5.

Subsequently, at Timing T23 when the current angle of the vertical angle is within the predetermined deviation (± 3 seconds, for example) with the target angle as a reference value for predetermined time t22 (200 milliseconds, for example) of longer, the control unit 46 determines that the automatic collimation of the telescope unit 45 has been completed and ends the control of the automatic collimation of the telescope unit 45. In the graph exemplified in FIG. 6, time t21 taken from Timing T21 when the automatic collimation was started until Timing T23 when the automatic collimation is completed is approximately 0.9 seconds.

As described above, according to the three-dimensional surveying apparatus 4 and the three-dimensional surveying apparatus driving program according to this Embodiment, when the current angle of the rotation angle of the telescope unit 45 exceeds the target angle related to the automatic collimation of the telescope unit 45, the control unit 46 changes the gradient of the integral term of the PI control (specifically, reduces it). Thus, the control unit 46 can set the integral gain of the PI control related to the automatic collimation of the telescope unit 45 to a larger value as compared to the integral gain of the PI control set in order to suppress occurrence of vibration of the telescope unit in a large angle turning operation of a global search. As described above in relation to FIG. 5 and FIG. 6, it is known that, when the control unit 46 sets the integral gain of the PI control related to the automatic collimation of the telescope unit 45 to a relatively large value, time taken until the automatic collimation of the telescope unit 45 is completed can be reduced.

Subsequently, a Second Embodiment will be explained.
It is to be noted that when the constituent elements of the three-dimensional surveying apparatus according to the Second Embodiment are similar to the constituent elements of the three-dimensional surveying apparatus according to the First Embodiment described above in relation to FIG. 1 to FIG. 6, duplicated explanation will be omitted as appropriate, and differences will be mainly explained below.

The constitution of the structural system and the control system of the three-dimensional surveying apparatus 4 according to the Second Embodiment is the same as the constitution of the structural system and the control system of the three-dimensional surveying apparatus 4 according to the First Embodiment described above in relation to FIG. 1 and FIG. 2. Thus, hereinbelow details of an operation of the three-dimensional surveying apparatus 4 according to the Second Embodiment and the three-dimensional surveying apparatus driving program executed by a computer of the three-dimensional surveying apparatus 4 according to the Second Embodiment will be explained with reference the drawings.

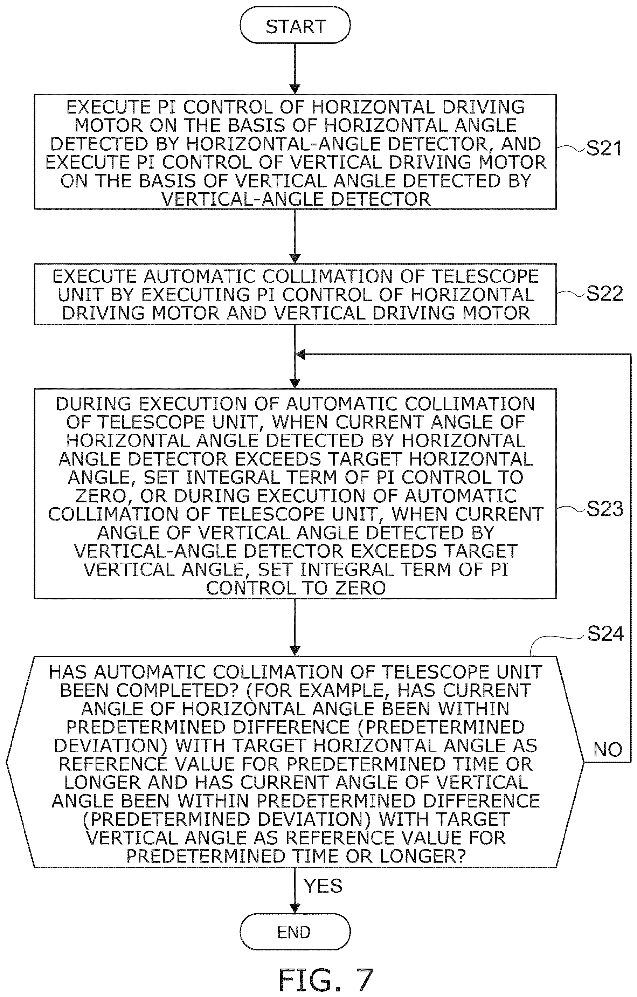

FIG. 7 is a flowchart for explaining an operation of the three-dimensional surveying apparatus according to the Second Embodiment.

It is to be noted that FIG. 7 corresponds to a flowchart for explaining the three-dimensional surveying apparatus driving program executed by a computer of the three-dimensional surveying apparatus 4 according to the Second Embodiment.

When such an operation of the "automatic collimation of the telescope unit" that the telescope unit 45 automatically collimates the measurement target 7 is performed, the control unit 46 of this Embodiment executes the PI control of the horizontal driving motor 433 and the vertical driving motor 443. In addition, when such an operation that the measurement target 7 present at an angle instructed by a user in accordance with manipulation of the user to the manipulation input unit 472 is collimated by the telescope unit 45 is performed, the control unit 46 of this Embodiment executes the PI control of the horizontal driving motor 433 and the vertical driving motor 443. The three-dimensional surveying apparatus 4 and the three-dimensional surveying apparatus driving program according to this Embodiment can be applied in any of the above-described collimation operations. That is, any one of the above-described collimation operations is included in the "collimation operation" of the present invention. In the following explanation, for convenience of the explanation, a case in which the control unit 46 executes the operation of the "automatic collimation of the telescope unit" is cited as an example. In addition, in the following explanation, for convenience of the explanation, the "operation of automatic collimation" is referred to simply as the "automatic collimation" in some cases.

As illustrated in FIG. 7, at Step S21, the control unit 46 executes the PI control of the horizontal driving motor 433 on the basis of the horizontal angle detected by the horizontal-angle detector 434. In addition, at Step S21, the control unit 46 executes the PI control of the vertical driving motor 443 on the basis of the vertical angle detected by the vertical-angle detector 444.

As described above, the control unit 46 executes the automatic collimation of the telescope unit 45 by executing the PI control of the horizontal driving motor 433 and the vertical driving motor 443 (Step S22).

Subsequently, at Step S23, while the automatic collimation of the telescope unit 45 is being performed, when the current angle of the horizontal angle detected by the horizontal-angle detector 434 exceeds the target horizontal angle related to the automatic collimation of the telescope unit 45, the control unit 46 sets the integral term of the PI control to zero. That is, the control unit 46 resets the integral term of the PI control.

In addition, at Step S23, during execution of the automatic collimation of the telescope unit 45, when the current angle of the vertical angle detected by the vertical-angle detector 444 exceeds the target vertical angle related to the automatic collimation of the telescope unit 45, the control unit 46 sets the integral term of the PI control to zero. That is, the control unit 46 rests the integral term of the PI control.

Subsequently, at Step S24, the control unit 46 determines whether or not the automatic collimation of the telescope unit 45 has been completed. For example, when the current angle of the horizontal angle is within a predetermined difference (that is, a predetermined deviation) with the target horizontal angle as the reference value for predetermined time or longer and the current angle of the vertical angle is within a predetermined difference (that is, a predetermined deviation) with the target vertical angle as the reference value for predetermined time or longer, the control unit 46 determines that the automatic collimation of the telescope unit has been completed.

Specifically, for example, in a case where the current angle of the horizontal angle is within a range of "target horizontal angle ± 3 seconds" for 200 milliseconds (msec) or longer and the current angle of the vertical angle is within a range of "target vertical angle ± 3 seconds" for 200 milliseconds (msec) or longer, the control unit 46 determines that the automatic collimation of the telescope unit 45 has been completed. However, the predetermined difference (that is, the predetermined deviation) is not limited to "± 3 seconds". Moreover, the predetermined time is not limited to 200 milliseconds.

When the control unit 46 determines that the automatic collimation of the telescope unit 45 has been completed (Step S24: YES), it ends the control of the automatic collimation of the telescope unit 45. On the other hand, when the control unit 46 determines that the automatic collimation of the telescope unit 45 has not been completed (Step S24: NO), it executes the processing described above in relation to Step S23.

That is, the control unit 46 sets the integral term of the PI control to zero each time the current angle of the horizontal angle exceeds the target horizontal angle. In addition, the control unit 46 sets the integral term of the PI control to zero each time the current angle of the vertical angle exceeds the target vertical angle. The detail of this will be described later.

According to the three-dimensional surveying apparatus 4 and the three-dimensional surveying apparatus driving program according to this Embodiment, the control unit 46 can set the integral gain of the PI control related to the automatic collimation of the telescope unit 45 to a larger value as compared to the integral gain of the PI control set in order to suppress occurrence of vibration of the telescope unit in the large angle turning operation of the global search. Thus, in a range (that is, a range of positioning control of a minute angle) in which a difference (that is, a deviation) between the current angle of the rotation angle of the telescope unit 45 and the target angle related to the automatic collimation of the telescope unit 45 is small, too, the integral term of the PI control becomes larger within a relatively short time.

That is, within a range in which the deviation between the current angle of the rotation angle of the telescope unit 45 and the target angle related to the automatic collimation of the telescope unit 45 is small, a torque of each of the horizontal driving motor 433 and the vertical driving motor 443 becomes larger in a relatively short time. As a result, the control unit 46 can bring the current angle of the rotation angle of the telescope unit 45 closer to the target angle related to the automatic collimation of the telescope unit 45 in a relatively short time.

At this time, when the current angle of the rotation angle of the telescope unit 45 exceeds the target angle related to the automatic collimation of the telescope unit 45, the control unit 46 sets the integral term of the PI control to zero. As a result, a torque of each of the horizontal driving motor 433 and the vertical driving motor 443 is changed (specifically, reduced). Thus, even in a case in which the current angle of the rotation angle of the telescope unit 45 exceeds the target angle related to the automatic collimation of the telescope unit 45, the control unit 46 can gently bring the current angle of the rotation angle of the telescope unit 45 closer to the target angle related to the automatic collimation of the telescope unit 45 in a relatively short time. As a result, the three-dimensional surveying apparatus 4 according to this Embodiment can reduce time taken until the automatic collimation of the telescope unit 45 is completed.

Subsequently, a specific example of an operation of the three-dimensional surveying apparatus 4 according to this Embodiment will be explained with reference to the drawings.

It is to be noted that, as described above in relation to FIG. 7, the control that the control unit 46 sets the integral term of the PI control to zero is similar in the case in which the current angle of the horizontal angle detected by the horizontal-angle detector 434 exceeds the target horizontal angle related to the automatic collimation of the telescope unit 45 and in the case in which the current angle of the vertical angle detected by the vertical-angle detector 444 exceeds the target vertical angle related to the automatic collimation of the telescope unit 45. Thus, the explanation will be made below with the case in which the current angle of the vertical angle detected by the vertical-angle detector 444 exceeds the target vertical angle related to the automatic collimation of the telescope unit 45 as an example. In addition, for convenience of the explanation, the vertical angle detected by the vertical-angle detector 444 is simply called as the "rotation angle", and the target vertical angle is simply called as the "target angle" in some cases.

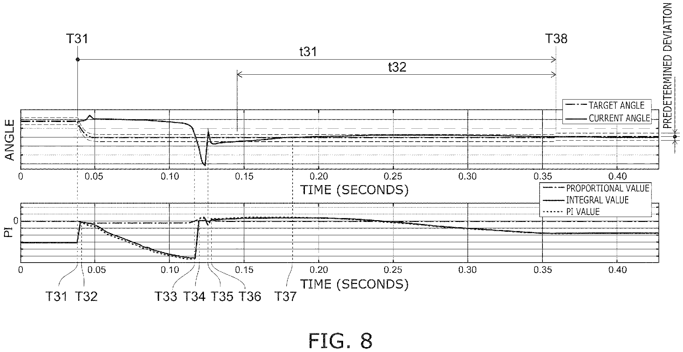

FIG. 8 is a graph for explaining a specific example of an operation of the three-dimensional surveying apparatus according to the Second Embodiment.

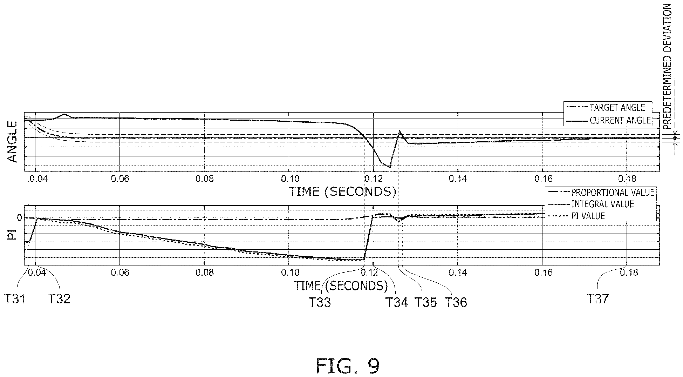

FIG. 9 is a graph that enlarges a predetermined range of elapsed time in the graph illustrated in FIG. 8.

The graphs on the upper stages illustrated in FIG. 8 and FIG. 9 are graphs exemplifying the relations among the elapsed time, the current angle of the vertical angle detected by the vertical-angle detector 444, and the target angle related to the automatic collimation of the telescope unit 45. The graphs on the lower stages illustrated in FIG. 8 and FIG. 9 are graphs exemplifying the relations among the elapsed time, the proportional term, the integral term, and the output value (that is, an input value with respect to the vertical driving motor 443) of the PI control.

In the graphs on the lower stages illustrated in FIG. 8 and FIG. 9, the "proportional value" indicates a value calculated by the proportional term of the PI control. The "integral value" indicates a value calculated by the integral term of the PI control. The "PI value" indicates an output value (that is, an input value with respect to the vertical driving motor 443) of the PI control.

In the graphs exemplified in FIG. 8 and FIG. 9, the control unit 46 starts execution of the automatic collimation at Timing T31. In this specific example, the control unit 46 sets the integral term of the PI control to zero at Timing T31 when the execution of the automatic collimation is started. That is, the control unit 46 executes such control that sets the integral term of the PI control to zero at Timing T31. As a result, the integral term of the PI control is zero at Timing T32.

Subsequently, at Timing T33, the current angle of the vertical angle detected by the vertical-angle detector 444 exceeds the target angle related to the automatic collimation for the first time since the execution of the automatic collimation was started. Timing T33 in this Embodiment is an example of the "first timing" of the present invention.

Thus, as in the graphs on the lower stages illustrated in FIG. 8 and FIG. 9, the control unit 46 sets the integral term of the PI control to zero at Timing T33. That is, the control unit 46 executes the control of setting the integral term of the PI control to zero at Timing T33.

The control unit 46 of this Embodiment sets the integral term of the PI control to zero by forcedly setting a variable part of the integral term of the PI control to zero. Specifically, the control unit 46 sets the integral term of the PI control to zero by forcedly setting the difference (that is, the deviation) of the current angle of the vertical angle detected by the vertical-angle detector 444 and the target angle related to the automatic collimation of the telescope unit 45 to zero.

As a result, the integral term of the PI control is zero at Timing T34.

Subsequently, at Timing T35 after Timing T31, the current angle of the vertical angle detected by the vertical-angle detector 444 exceeds the target angle related to the automatic collimation again, and the current angle of the vertical angle exceeds the range of the predetermined deviation (± 3 seconds, for example) with the target angle as the reference value. Timing T35 in this Embodiment is an example of the "second timing" of the present invention.

Thus, as in the graphs on the lower stages illustrated in FIG. 8 and FIG. 9, the control unit 46 sets the integral term of the PI control to zero at Timing T35, again. That is, the control unit 46 executes the control of setting the integral term of the PI control to zero at Timing T35, again. Means of setting the integral term of the PI control to zero is as described above, for example. As a result, the integral term of the PI control becomes zero at Timing T36.

Subsequently, at Timing T37 after Timing T35, the current angle of the vertical angle detected by the vertical-angle detector 444 exceeds the target angle related to the automatic collimation again. On the other hand, at Timing T35 and after, the current angle of the vertical angle does not exceed the range of the predetermined deviation (:1: 3 seconds, for example) with the target angle as the reference value. Thus, in this case, the control unit 46 does not set the integral term of the PI control to zero.

Subsequently, as in the graph on the upper stage illustrated in FIG. 8, at Timing T38 when the current angle of the vertical angle is within a predetermined deviation (± 3 seconds, for example) with the target angle as a reference value for predetermined time t32 (for 200 milliseconds, for example) or longer, the control unit 46 determines that the automatic collimation of the telescope unit 45 has been completed and ends the control of the automatic collimation of the telescope unit 45. In the graph exemplified in FIG. 8, time t31 taken from Timing T31 when the automatic collimation was started to Timing T38 when the automatic collimation was completed is approximately 0.3 seconds.

As explained above, according to the three-dimensional surveying apparatus 4 and the three-dimensional surveying apparatus driving program according to this Embodiment, when the current angle of the rotation angle of the telescope unit 45 exceeds the target angle related to the automatic collimation of the telescope unit 45, the control unit 46 sets the integral term of the PI control to zero. That is, the control unit 46 resets the integral term of the PI control. Therefore, by comparing with an integral gain of the PI control set in order to suppress occurrence of vibration of the telescope unit in a large angle turning operation of the global search, the control unit 46 can set the integral gain of the PI control related to the automatic collimation of the telescope unit 45 to a large value. As a result, time taken until the automatic collimation of the telescope unit 45 is completed can be reduced.

As described above, the Embodiment of the present invention has been explained. However, the present invention is not limited to the above-described Embodiment, but various changes can be made within a range not departing from the scope of claims. The constitution of the above-described Embodiment can be partially omitted or arbitrarily combined so as to become different from the above.

A part or the whole of the above-described Embodiment can be also described as in the appendix below but the following is not limiting.
1. A three-dimensional surveying apparatus for acquiring three-dimensional data of a measurement target, the apparatus including:
   a telescope unit for collimating the measurement target and emitting distance-measuring light;
   a driving motor for rotating the telescope unit around a shaft center thereof;
   an angle detector for detecting a rotation angle of the telescope unit; and
   a control unit for executing a collimation operation of the telescope unit by executing PI control of the driving motor on the basis of the rotation angle detected by the angle detector, in which
   the control unit changes an integral term of the PI control when a current angle of the rotation angle detected by the angle detector exceeds a target angle related to the collimation operation during execution of the collimation operation.
2. The three-dimensional surveying apparatus described in the above-described 1, wherein
   the control unit changes the integral term by changing a gradient of the integral term.
3. The three-dimensional surveying apparatus described in the above-described 2, in which
   the control unit changes the gradient by changing a coefficient included in an integral gain of the integral term.
4. The three-dimensional surveying apparatus described in the above-described 3, in which
   the coefficient is expressed in a power expression; and the control unit changes the gradient by changing a power exponent.
5. The three-dimensional surveying apparatus described in any one of the above-described 2 to 4, in which
   the control unit reduces the gradient each time when the current angle exceeds the target angle.
6. The three-dimensional surveying apparatus described in the above-described 1, in which
   the control unit changes the integral term by setting the integral term to zero.
7. The three-dimensional surveying apparatus described in the above-described 6, in which
   the control unit sets the integral term to zero by forcedly setting a difference between the current angle and the target angle included in the integral term to zero.
8. The three-dimensional surveying apparatus described in the above described 6 or 7, in which
   the control unit sets the integral term to zero at first timing when the current angle exceeds the target angle for the first time since execution of the collimation operation is started and sets the integral term to zero again at second timing when the current angle exceeds the target angle at or after the first timing and the current angle exceeds a range of a predetermined deviation, with the target angle being a reference value.
9. A three-dimensional surveying apparatus driving program executed by a computer of a three-dimensional surveying apparatus for acquiring three-dimensional data of a measurement target,
   the program causing the computer to execute:
   executing PI control of a driving motor for rotating the telescope unit around a shaft center thereof on the basis of the rotation angle detected by an angle detector for detecting a rotation angle of a telescope unit;
   performing a collimation operation of the telescope unit by executing the PI control; and
   changing an integral term of the PI control during execution of the collimation operation, when a current angle of the rotation angle detected by the angle detector exceeds a target angle related to the collimation operation.
10. The three-dimensional surveying apparatus driving program according to the above-described 9, in which
   in the changing of the integral term, the integral term is changed by changing a gradient of the integral term.
11. The three-dimensional surveying apparatus driving program according to the above-described 9, in which
   in the changing of the integral term, the integral term is changed by setting the integral term to zero.

## Claims

1. A three-dimensional surveying apparatus for acquiring three-dimensional data of a measurement target, the apparatus comprising:
a telescope unit for collimating the measurement target and emitting distance-measuring light;
a driving motor for rotating the telescope unit around a shaft center thereof;
an angle detector for detecting a rotation angle of the telescope unit; and
a control unit for executing a collimation operation of the telescope unit by executing PI control of the driving motor on the basis of the rotation angle detected by the angle detector, wherein
the control unit changes an integral term of the PI control when a current angle of the rotation angle detected by the angle detector exceeds a target angle related to the collimation operation during execution of the collimation operation.

2. The three-dimensional surveying apparatus according to claim 1, wherein
the control unit changes the integral term by changing a gradient of the integral term.

3. The three-dimensional surveying apparatus according to claim 2, wherein
the control unit changes the gradient by changing a coefficient included in an integral gain of the integral term.

4. The three-dimensional surveying apparatus according to claim 3, wherein,
the coefficient is expressed in a power expression; and
the control unit changes the gradient by changing the power exponent.

5. The three-dimensional surveying apparatus according to claim 2, wherein,
the control unit reduces the gradient each time when the current angle exceeds the target angle.

6. The three-dimensional surveying apparatus according to claim 1, wherein,
the control unit changes the integral term by setting the integral term to zero.

7. The three-dimensional surveying apparatus according to claim 6, wherein,
the control unit sets the integral term to zero by forcedly setting a difference between the current angle and the target angle included in the integral term to zero.

8. The three-dimensional surveying apparatus according to claim 6, wherein,
the control unit sets the integral term to zero at first timing when the current angle exceeds the target angle for the first time since execution of the collimation operation is started and sets the integral term to zero again at second timing when the current angle exceeds the target angle at or after the first timing and the current angle exceeds a range of a predetermined deviation, with the target angle being a reference value.

9. A three-dimensional surveying apparatus driving program executed by a computer of a three-dimensional surveying apparatus for acquiring three-dimensional data of a measurement target,
the program causing the computer to execute:
executing PI control of a driving motor for rotating the telescope unit around a shaft center thereof on the basis of the rotation angle detected by an angle detector for detecting a rotation angle of a telescope unit;
executing a collimation operation of the telescope unit by executing the PI control; and
changing an integral term of the PI control during execution of the collimation operation, when a current angle of the rotation angle detected by the angle detector exceeds a target angle related to the collimation operation.

10. The three-dimensional surveying apparatus driving program according to claim 9, wherein
in the changing of the integral term, the integral term is changed by changing a gradient of the integral term.

11. The three-dimensional surveying apparatus driving program according to claim 9, wherein
in the changing of the integral term, the integral term is changed by setting the integral term to zero.
